(19) Europäisches Patentamt
European Patent Office
Office européen des brevets

(11) Veröffentlichungsnummer: **0 289 497 B1**

(12) # EUROPÄISCHE PATENTSCHRIFT

(45) Veröffentlichungstag der Patentschrift:
**11.09.91 Patentblatt 91/37**

(51) Int. Cl.⁵: **G09F 9/30, G02F 1/133,**
**// G09F9/37**

(21) Anmeldenummer: **87900116.2**

(22) Anmeldetag: **09.12.86**

(86) Internationale Anmeldenummer:
**PCT/EP86/00732**

(87) Internationale Veröffentlichungsnummer:
**WO 87/03992 02.07.87 Gazette 87/14**

(54) **ANZEIGEVORRICHTUNG.**

(30) Priorität: **17.12.85 DE 3544513**

(43) Veröffentlichungstag der Anmeldung:
**09.11.88 Patentblatt 88/45**

(45) Bekanntmachung des Hinweises auf die
Patenterteilung:
**11.09.91 Patentblatt 91/37**

(84) Benannte Vertragsstaaten:
**AT BE CH DE FR GB LI SE**

(56) Entgegenhaltungen:
**DE-A- 2 461 837**
**DE-A- 3 346 630**
**GB-A- 296 383**
**GB-A- 1 374 995**

(73) Patentinhaber: **Brinner, Hans-Werner**
**Tiroler Strasse 63**
**7000 Stuttgart 61 (DE)**

(72) Erfinder: **Brinner, Hans-Werner**
**Tiroler Strasse 63**
**7000 Stuttgart 61 (DE)**

(74) Vertreter: **Patentanwälte Dr. Ing. Eugen Maier**
**Dr. Ing. Eckhard Wolf**
**Eugensplatz 5 Postfach 13 10 01**
**W-7000 Stuttgart 1 (DE)**

EP 0 289 497 B1

**Beschreibung**

Die Erfindung betrifft eine Anzeigevorrichtung mit einem aus einzeln ansteuerbaren, optisch kontrastierbaren Rasterelementen bestehenden Rasterfeld der im Oberbegriff des Anspruchs 7 angegebenen Gattung.

Anzeigevorrichtungen mit aus gleichartigen Rasterelementen bestehenden Rasterfeldern ermöglichen eine flexible Zeichen- und Graphikdarstellung, die an die unterschiedlichsten Anwendungsfälle anpaßbar ist. Je dichter das Raster ist und je mehr Punkte innerhalb des Rasterfeldes ansteuerbar sind, um so geschlossener wird der Gesamteindruck der Zeichendarstellung. Andererseits steigt bei zunehmender Anzahl an Rasterpunkten in einem Rasterfeld der für die Einzelansteuerung der Rasterpunkte erforderliche technische Aufwand.

Um auch bei einer relativ geringen Rasterelementdichte innerhalb eines Rasterfeldes einen zusammenhängenden Gesamteindruck der Zeichendarstellung zu erhalten, ist bei einem Rasterfel mit quadratischen Rasterelementen mit jeweils geschlossenem Außenrand bereits vorgeschlagen worden (DE-PS 3313353), daß die Rasterelemente an gemeinsamen Begrenzungsstrecken ihres Außenrands aneinander unmittelbar angrenzen, so daß im Rasterfeld zwei Hauptrichtungen durch die beiden einander unter einem rechten Winkel schneidenden Scharen von sich nicht schneidenden Verbindungslinien zwischen den Endpunkten von einander in den Rasterelementen gegenüberliegenden Begrenzungsstrecken definiert sind. Die bekannte Anzeigevorrichtung wird vornehmlich zur Ziffernanzeige auf Anzeigetafeln für Sportzwecke eingesetzt, deren Schrift auch von großer Entfernung aus lesbar sein muß.

Die Darstellung alphanumerischer Zeichen ist mit der bekannten Rasterkonfiguration allerdings nicht in ihrer Gesamtheit möglich, da sich schräg zu den Hauptrichtungen verlaufende Linien, wie sie bei vielen Buchstaben des Alphabets vorkommen, nicht zusammenhängend darstellen lassen.

Um möglichst alle alphanumerischen Zeichen zusammenhängend darstellen zu können, ist es bei einer Anzeigevorrichtung der eingangs angegebenen Art bekannt (GB-A-296383), die Rasterelemente aus gleichseitigen Sechseckplättchen zu bilden, die zu einem gleichförmigen Sechseckraster zusammengesetzt sind. Dementsprechend sind bei dieser Anzeigevorrichtung drei Hauptrichtungen vorgesehen, die einen Winkel von jeweils 60° untereinander einschließen und von denen eine horizontal ausgerichtet ist. Da in einem solchen Raster die Vertikale nicht dargestellt werden kann, muß sie durch 60°-Ausrichtungen gegenüber der Horizontalen angenähert werden. Diese Annäherung reicht bei vielen alphanumerischen und graphischen Symbolen mit senkrechten und diagonalen Unterelementen vor allem bei geringer Rasterelementzahl für eine leserliche und ästhetisch befriedigende Darstellung nicht aus.

Der Erfindung liegt daher die Aufgabe zugrunde, die bekannte Rasteranzeige der eingangs angegebenen Art dahingehend zu verbessern, daß mit möglichst wenigen Rasterelementen eine optimale Anpassung an unterschiedliche Schriftarten und graphische Darstellungen und Symbole möglich ist.

Zur Lösung dieser Aufgabe werden die im Kennzeichenteil des Anspruchs 1 angegebenen Merkmale vorgeschlagen. Weitere vorteilhafte Ausgestaltungen und Weiterbildungen der Erfindung ergeben sich aus den Unteransprüchen.

Die erfindungsgemäße Lösung geht von dem Gedanken aus, daß bei einem Rasterfeld mit sechseckigen Rasterelementen neben der ersten und zweiten Hauptrichtung eine dritte Hauptritung definiert ist, entlang der eine zusammenhängende Lieniendarstellung möglich ist. Die dritte Hauptrichtung ist erfindungsgemäß durch eine dritte Schar einander nicht schneidender Verbindungslinien durch zwischen den benachbarten Endpunkten einander in den Rasterelementen gegenüberliegender Begrenzungsstrecken definiert und schneidet die beiden ersten Hauptrichtungen unter einem Winkel von vorzugsweise 30° bis 60° im ersten und dritten bzw. zweiten und vierten Quadranten des durch die beiden ersten Hauptrichtungen aufgespannten Koordinatensystems. Die beiden Verbindungslinienscharen der ersten und zweiten Hauptrichtung schneiden einander erfindungsgemäß unter einem Winkel zwischen 70° und 110°.

Gemäß einem bevorzugten Ausführungsbeispiel der Erfindung schneiden sich die die beiden ersten Hauptrichtungen definierenden Verbindungslinien innerhalb eines jeden Rasterelements paarweise unter Bildung eines Innenvierecks, von dem zwei einander gegenüberliegende Schnittpunkte zueinander diagonal angeordnete Eckpunkte des Rasterelements bilden und die beiden anderen Schnittpunkte innerhalb des Rasterelements angeordnet sind und eine im wesentlichen mit der dritten Hauptrichtung zusammenfallende oder mit dieser einen spitzen Winkel von weniger als 20° einschließende Viereckdiagonale bilden. Die zu den Hauptrichtungen gehörenden Verbindungslinien können gerade oder krummlinig ausgebildet sein, unter der Voraussetzung, daß die Verbindungslinien innerhalb einer zu einer Hauptrichtung gehörenden Schar einander nicht schneiden. Der Winkel zwischen den Hauptrichtungen kann an verschiedenen Stellen des Rasterfelds gleich oder unterschiedlich sein.

Eine besonders ansprechende Zeichendarstellung erhält man, wenn eine der Hauptrichtungen durch eine im Rasterfeld horizontal verlaufende Verbindungslinienschar definiert ist und die zweite Hauptrichtung die erste unter einem Winkel zwischen 75° und 90° schneidet. Eine weitere ansprechende Zeichendarstellung mit aus-

2

geprägter Symmetrie erhält man, wenn eine der Hauptrichtungen durch eine im Rasterfeld horizontal verlaufende Verbindungslinienschar definiert ist und wenn die zweite und dritte, durch je eine Geradenschar definierte Hauptrichtung die erste unter einander entgegengesetzt gleichen Winkeln von vorzugsweise ±70° bis ±75° schneiden.

Die getrennt ansteuerbaren und optisch kontrastierbaren Rasterelemente werden vorteilhafterweise durch LED-, LCD-, Glimm- oder Glühemissionsbereiche gebildet, die an ihrem Außenrand jeweils durch die Begrenzungsstrecken berandet sind. Die Rasterelemente können auch durch einseitig offene, an zur Rasterfeldebene senkrechten Zwischenwänden voneinander getrennte Leuchtkammern gebildet sein, deren Zwischenwände an ihren öffnungsseitigen Außenkanten die Begrenzungsstrecken bilden.

Die Erfindung wird im folgenden anhand der in der Zeichnung dargestellten bevorzugten Ausführungsbeispiele näher erläutert. Es zeigen

Fig. 1     einen Ausschnitt aus einem Rasterfeld mit räumlich variablen Hauptrichtungen ;
Fig. 2     einen Ausschnitt aus einem Rasterfeld mit räumlich konstanten Hauptrichtungen ;
Fig. 3a    ein Rasterfeld mit einem alphanumerischen Zeichensatz im 5 × 5-Raster ;
Fig. 3b    einen Ausschnitt aus einem Rasterfeld entsprechend Fig. 3a mit halbierten Sonderelementen ;
Fig. 4a    einen alphanumerischen Zeichensatz im 5 × 7-Raster mit Unterlängen ;
Fig. 4b    Sonderzeichen im 5 × 7-Raster entsprechend Fig. 4a.

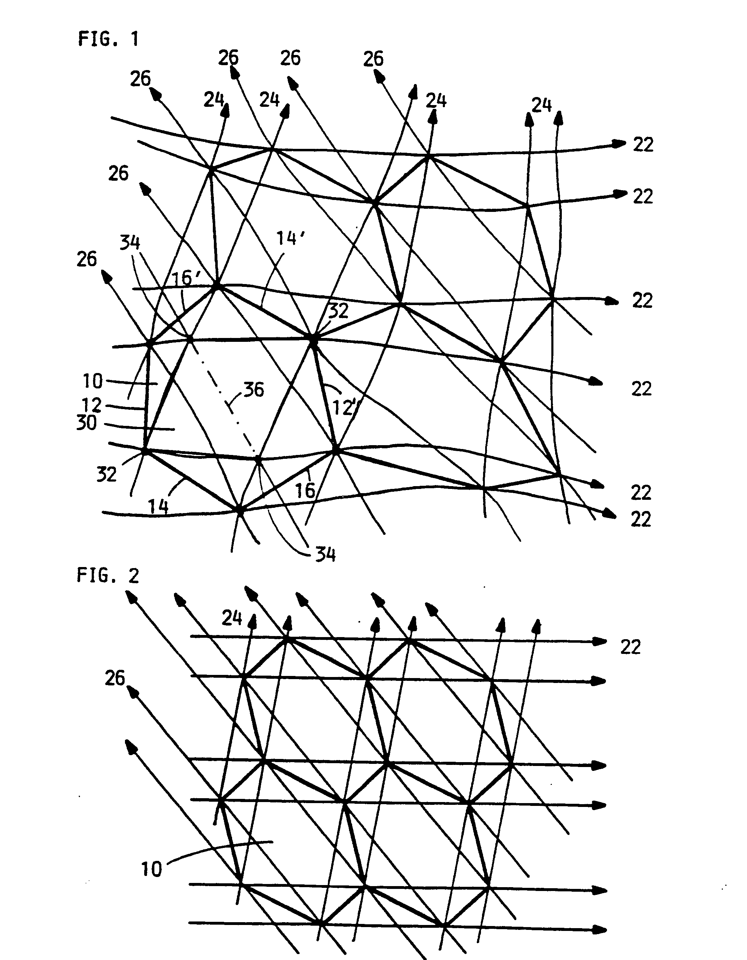

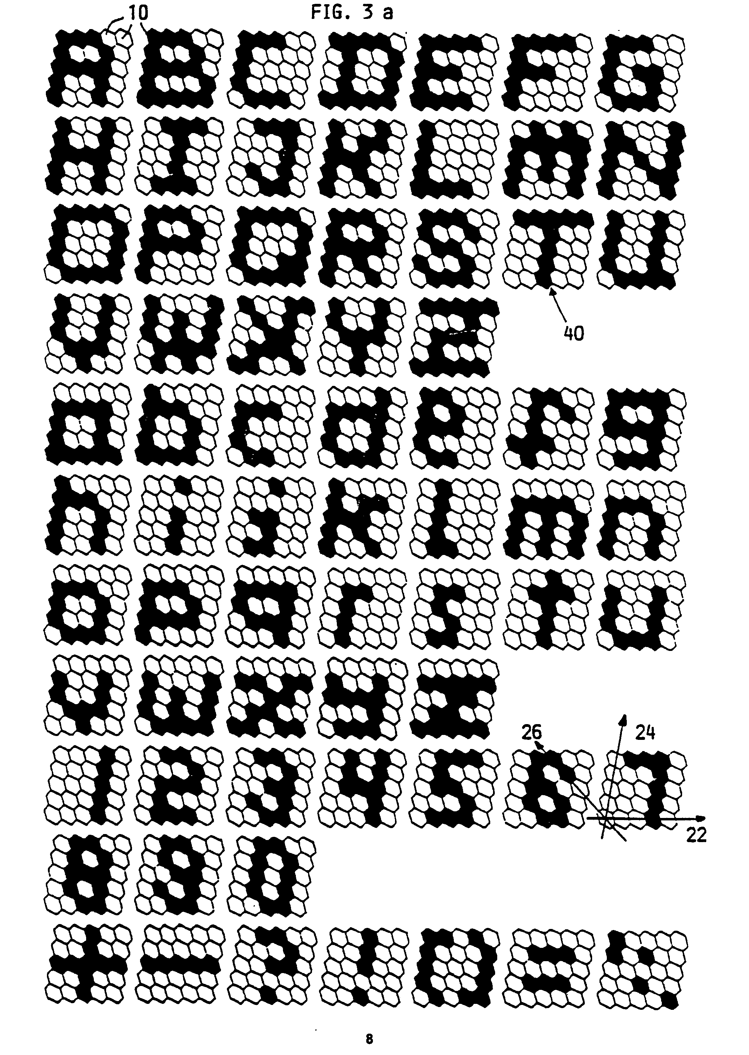

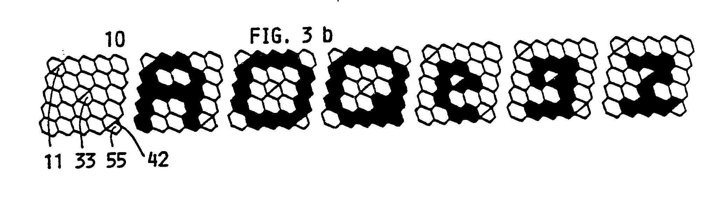

Die in den Figuren 1 und 2 dargestellten Rasterfelder enthalten eine große Anzahl Rasterelemente 10, die jeweils durch sechs an ihren Endpunkten miteinander verbundene Begrenzungsstrecken 12, 12', 14, 14', 16, 16' berandet sind und an gemeinsamen Begrenzungsstrecken unmittelbar oder in kleinem Abstand aneinander angrenzen. Die Rasterelemente 10 sind einzeln mit mechanischen, optischen oder elektrischen Mitteln unter Bildung optischer Kontraste gegenüber den benachbarten Rasterelementen ansteuerbar. Durch die Verbindungslinien zwischen den Endpunkten einander im Rasterelement gegenüberliegender Begrenzungsstrecken 12, 12', 14, 14', 16, 16' werden imRasterfeld drei Hauptrichtungen 22, 24, 26 definiert, die im Falle der Fig. 1 eine von Element zu Element variable und im Falle der Fig. 2 eine konstante Ausrichtung aufweisen, In den drei Hauptrichtungen 22, 24, 26 schließen benachbarte Rasterelemente 10 an den Begrenzungsstecken unmittelbar aneinander an, so daß bei gemeinsamer Ansteuerung der Rasterelemente einer Hauptrichtung der optische Eindruck eines lückenlos zusammenhängenden Bandes entsteht. Damit lassen sich mit relativ wenigen Rasterelementen 10 auch von größerer Entfernung aus gut lesbare alphanumerische Schriftzeichen sowie zusammenhängende graphische Darstellungen erzeugen.

In dem in Fig. 1 gezeigten Ausführungsbeispiel schneiden sich die erste und die zweite Hauptrichtung 22, 24 je nach Lage innerhalb des Rasterfelds unter einem Winkel zwischen 70° und 110°. Die dritte Hauptrichtung 26 schneidet die beiden ersten Hauptrichtungen 22, 24 unter einem Winkel zwischen 30° und 60° im zweiten und vierten Quadranten des durch die beiden ersten Hauptrichtungen 22, 24 aufgespannten Koordinatensystems.

Die die beiden ersten Hauptrichtungen 22, 24 definierenden Verbindungslinien schneiden sich innerhalb eines jeden Rasterelements 10 paarweise unter Bildung eines Innenvierecks 30. Zwei einander gegenüberliegende Schnittpunkte 32 dieses Innenvierecks bilden zueinander diagonal angeordnete Eckpunkte des Rasterelements, während die beiden anderen Schnittpunkte 34 innerhalb des Rasterelements 10 angeordnet sind und eine im wesentlichen mit der dritten Hauptrichtung 26 zusammenfallende oder mit dieser einen spitzen Winkel von weniger als 20° einschließende Viereckdiagonale 36 bilden.

Bei dem Ausführungsbeispiel nach Fig. 2 ist die erste Hauptrichtung 22 durch eine im Rasterfeld horizontal verlaufende Verbindunglinienschar definiert, während die durch die zweite Verbindungslinienschar definierte Hauptrichtung 24 die erste Hauptrichtung 22 unter einem Winkel von etwa 80° schneidet. Die dritte Hauptrichtung 26 steht unter einem Winkel von etwa 50° zu den beiden ersten Hauptrichtungen 22, 24 im zweiten und vierten Quadranten des durch die beiden ersten Hauptrichtungen aufgespannten Koordinatensystems.

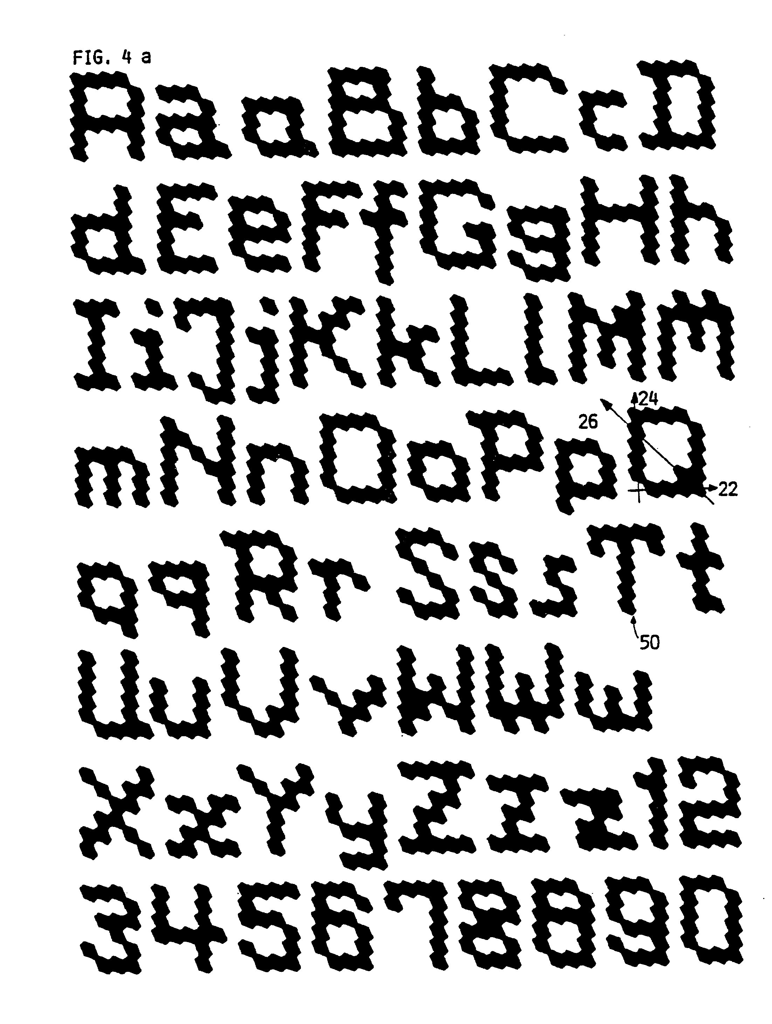

Der in Fig. 3a gezeigte alphanumerische Zeichensatz 40 wurde in einem Rasterfeld entsprechend Fig. 2 erzeugt. Für die Darstellung eines jeden Zeichens wurde ein Feld von 5 × 5-Rasterelementen 10 reserviert. Mit diesem 5 × 5-Raster sind zwar noch keine Unterlängen möglich. Dennoch läßt sich jedes Zeichen deutlich lesbar in einem geschlossenen Linienzug darstellen.

In Fig. 3b ist gezeigt, wie durch eine gezielte Unterteilung einzelner Rasterelemente 11, 33, 55 innerhalb des 5 × 5-Rasters bei komplizierten Zeichen wie e, g und z noch eine Verbesserung der Zeichendarstellung erzielt werden kann. Bei dem dort gezeigten Ausführungsbeispiel sind die Elemente 1/1, 3/3 und 5/5 innerhalb des 5 × 5-Rasters durch eine diagonale Begrenzungsstrecke 42 in jeweils zwei getrennt ansteuerbare Rasterelementhälften unterteilt. Mit dieser Maßnahme lassen sich auch die Eckpunkte der Buchstaben A, O und Q noch etwas abrunden, so daß insgesamt ein ansprechenderer Gesamteindruck und eine bessere Lesbarkeit gewährleistet ist.

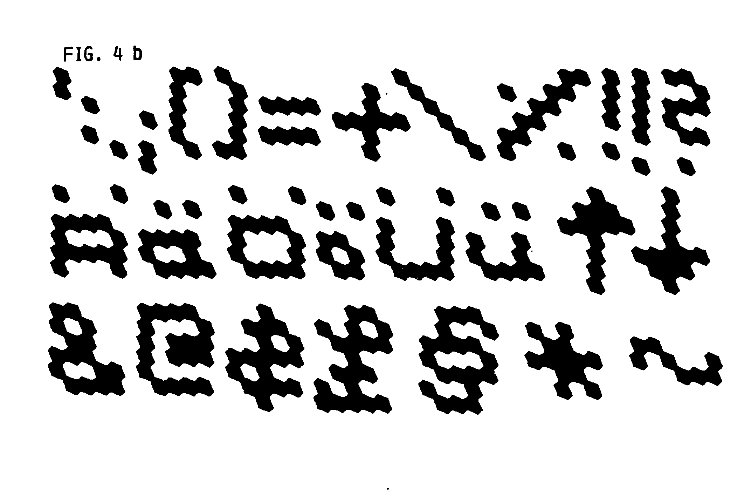

Eine weitere Verbesserung der Lesbarkeit alphanumerischer Zeichen läßt sich durch eine Vergrößerung des Rasters auf 5 × 7 Rasterelemente je Zeichen erzielen. In den Figuren 4a und 4b ist ein vollständiger Zeichensatz 50 mit Sonderzeichen unter Verwendung eines 5 × 7-Rasters dargestellt. Die beiden Hauptrichtungen 22, 24 schneiden sich hier unter einem Winkel von 90°, während die dritte Hauptrichtung 26 die beiden ersten Hauptrichtungen unter jeweils 45° im zweiten und vierten Quadranten des durch die beiden ersten Hauptrichtungen aufgespannten rechtwinkligen Koordinatensystems schneiden. Mit dem 5 × 7-Raster ist es bereits möglich, an Buchstaben wie f, g, j und y Unterlängen zu erzeugen sowie eine Vielzahl Sonderzeichen darzustellen. Selbstverständlich kann durch Neigung der zweiten Hauptrichtung 24 um etwa 10° bis 15° im Uhrzeigersinn eine noch etwas ansprechendere Zeichendarstellung erzielt werden.

**Patentansprüche**

1. Anzeigevorrichtung mit einem aus einzeln ansteuerbaren, optisch kontrastierbaren, einen geschlossenen Außenrand aufweisenden und an gemeinsamen Begrenzungsstrecken des Außenrands unmittelbar oder in kleinem Abstand aneinander angrenzenden, durch sechs an ihren Endpunkten miteinander verbundene Begrenzungsstrecken berandeten Rasterelementen bestehenden Rasterfeld, in welchem drei Hauptrichtungen durch die drei Scharen einander nicht schneidender Verbindungslinien zwischen den Endpunkten der einander in den Rasterelementen gegenüberliegenden Begrenzungsstrecken definiert sind, **dadurch gekennzeichnet,** daß zwei der drei Hauptrichtungen (22, 24) einander unter einem Winkel zwischen 70° und 110° schneiden, und daß die dritte Hauptrichtung (26) die beiden ersten Hauptrichtungen (22, 24) unter einem Winkel von 30° bis 60° im ersten und dritten bzw. zweiten und vierten Quadranten des durch diese definierten Koordinatensystems schneidet.

2. Anzeigevorrichtung nach Anspruch 1, **dadurch gekennzeichnet,** daß die zu mindest einer der Hauptrichtungen (21, 24, 26) gehörenden Verbindungslinien krummlinig sind.

3. Anzeigevorrichtung nach Anspruch 1 oder 2, **dadurch gekennzeichnet,** daß der Winkel zwischen jeweils zwei Hauptrichtungen (22, 24, 26) an verschiedenen Stellen des Rasterfelds unterschiedlich ist.

4. Anzeigevorrichtung nach einem der Ansprüche 1 bis 3, **dadurch gekennzeichnet,** daß eine der Hauptrichtungen (22) durch eine im Rasterfeld horizontal verlaufende Verbindungslinienschar definiert ist und daß die zweite Hauptrichtung (24) die erste Hauptrichtung unter einem Winkel zwischen 75° und 90° schneidet.

5. Anzeigevorrichtung nach einem der Ansprüche 1 bis 4, **dadurch gekennzeichnet,** daß zumindest ein Teil der Rasterelemente (11, 33, 55) des Rasterfelds durch eine diagonale Begrenzngsstrecke (42) in zwei voneinander unabhängig ansteuerbare Rasterelementhälften unterteilt ist.

6. Anzeigevorrichtung nach Anspruch 5, **dadurch gekennzeichnet,** daß die die beiden ersten Hauptrichtungen (22, 24) definierenden Verbindungslinien sich paarweise unter Bildung eines Innenvierecks (30) innerhalb eines jeden Rasterelements schneiden, von dem zwei einander gegenüberliegende Schnittpunkte (32) zueinander diagonal angeordnete Eckpunkte des Rasterelements (10) bilden und die beiden anderen Schnittpunkte (34) innerhalb des Rasterelements (10) angeordnet sind und eine im wesentlichen mit der dritten Hauptrichtung (26) zusammenfallende oder mit dieser einen spitzen Winkel von weniger als 20° einschließende Viereckdiagonale (36) bilden, und daß die diagonale Begrenzungsstrecke (42) durch die durch die Eckpunkte (32) des Rasterelementes verlaufende Diagonale des Innenvierecks (30) gebildet ist.

7. Anzeigevorrichtung nach einem der Ansprüche 1 bis 6, **dadurch gekennzeichnet,** daß die Rasterelemente (10) bzw. Rasterelementhälften (11, 33, 55) aus getrennt ansteuerbaren, durch die Begrenzungsstrecken (12, 12', 14, 14', 16, 16', 42) berandeten LED-, LCD-, Glimm- oder Glühmissionsbereiche gebildet sind.

8. Anzeigevorrichtung nach einem der Ansprüche 1 bis 7, **dadurch gekennzeichnet,** daß die Rasterelemente (10) durch einseitig offene, an zur Rasterfeldebene senkrechten Zwischenwänden voneinander getrennte Leuchtkammern gebildet sind, deren Zwischenbereiche an ihren öffnungsseitigen Außenkanten, die Begrenzungsstecken (12, 12', 14, 14', 16, 16') bilden.

9. Anzeigevorrichtung nach einem der Ansprüche 1 bis 8, **dadurch gekennzeichnet,** daß die Rasterelemente (10) bzw, Rasterelementhälften (11, 33, 55) bistabil gelagerte Körper oder Plättchen aufweisen, die jeweils zwei optisch gegeneinander kontrastierte, wahlweise in Sichtposition schwenkbare oder verschiebbare Sichtflächen aufweisen.

10. Anzeigevorrichtung nach einem der Ansprüche 1 bis 9, **dadurch gekennzeichnet,** daß eine der Hauptrichtungen durch eine im Rasterfeld horizontal verlaufende Verbindungslinienschar definiert ist und daß die zweite und dritte Hauptrichtung (24, 26) durch Geradenscharen definiert sind, die mit der ersten Hauptrichtung einander entgegengesetzt gleiche Winkel von ± 70° bis ± 75° einschließen.

EP 0 289 497 B1

## Revendications

1. Dispositif d'affichage comprenant un champ de trame constitué d'éléments de trame pouvant être commandés individuellement et contrastés optiquement, présentant un bord extérieur continu et se raccordant directement ou à une faible distance sur des sections de délimitation communes et bordés par six sections de délimitation reliées entre elles par leurs points d'extrémité, et dans lequel trois directions principales sont définies par les trois systèmes de lignes de liaison qui ne se coupent pas, entre les points d'extrémités des sections de délimitation opposées à l'intérieur des éléments de trame, **caractérisé en ce** que deux des trois directions principales (22, 24) se coupent sous un angle compris entre 70° et 110°, et que la troisième direction principale (26) coupe les deux premières directions principales (22, 24) sous un angle de 30° à 60° dans les premier et troisième et respectivement dans le deuxième et quatrième quadrants du système de coordonées défini par celles-ci.

2. Dispositif d'affichage selon la revendication 1, caractérisé en ce que les lignes de liaison associées à au moins l'une des directions principales (22, 24, 26) sont courbes.

3. Dispositif d'affichage selon l'une des revendications 1 ou 2, caractérisé en ce que l'angle entre respectivement deux directions principales (22, 24, 26) est variable à différents endroits du champ de trame.

4. Dispositif d'affichage selon l'une des revendications 1 à 3, caractérisé en ce que l'une des directions principales (22) est définie par un système de lignes de liaison orientées horizontalement dans le champ de trame, et que la seconde direction principale (24) coupe la première direction principale sous un angle compris entre 75° et 90°.

5. Dispositif d'affichage selon l'une des revendications 1 à 4, caractérisé en ce qu'au moins une partie des éléments de trame (11, 13, 55) du champ de trame est subdivisée par une section de délimitation diagonale (42) en deux moitiés d'élément de trame pouvant être commandées indépendamment l'une de l'autre.

6. Dispositif d'affichage selon la revendication 5, caractérisé en ce que les lignes de liaison définissant les deux premières directions principales (22, 24) se coupent par paires, avec formation d'un quadrilatère intérieur (30) à l'intérieur de chaque élément de trame, dont deux points d'intersection (32) opposés forment des points d'angle de l'élément de trame (10) disposés en diagonale et dont les deux autres points d'intersection (34) sont disposés à l'intérieur de l'élément de trame (10) et forment une diagonale de quadrilatère (36) qui coïncide sensiblement avec la troisième direction principale (26) ou renferment avec celle-ci un angle aigu de moins de 20°; et que la section de délimitation diagonale (42) est constituée par la diagonale du quadrilatère intérieur (30) qui passe par les points d'angle (32) de l'élément de trame.

7. Dispositif d'affichage selon l'une des revendications 1 à 6, caractérisé en ce que les éléments de trame (10) et respectivement les moitiés d'éléments de trame (11, 33, 55) sont constitués par des zones LED, LCD, de décharge lumineuse ou d'émission thermoélectronique qui peuvent être commandées séparément et qui sont bordées par les sections de délimitation (12, 12′, 14, 14′, 16, 16′, 42).

8. Dispositif d'affichage selon l'une des revendications 1 à 7, caractérisé en ce que les éléments de trame (10) sont constitués par des chambres lumineuses séparées par des cloisons orientées perpendiculairement par rapport au plan du champ de trame et dont les régions intermédiaires forment sur leurs arêtes extérieures du côté ouverture les sections de délimitation (12, 12′, 14, 14′, 16, 16′).

9. Dispositif selon l'une des revendications 1 à 8, caractérisé en ce que les éléments de trame (10) et respectivement les moitiés d'éléments de trame (11, 33, 55) comprennent des corps ou plaquettes montés de manière bistable lesquels comportent chacun deux surfaces de visualisation optiquement contrastées l'une par rapport à l'autre qui peuvent être pivotées ou déplacées au choix dans la position visible.

10. Dispositif d'affichage selon l'une des revendications 1 à 9, caractérisé en ce que l'une des directions principales est définie par un système de lignes de liaison orientées horizontalement dans le champ de trame, et que les seconde et troisième directions principales (24, 26) sont définies par des systèmes de lignes droites qui renferment avec la première direction principale des angles égaux opposés de ±70° à ±75°.

## Claims

1. Indicator device, comprising a grid array with grid elements which are individually controlled, optically constrastible, have a continuous outer edge and which are adjacent directly or with a small gap to mutual limiting paths of the outer edge and are edged by six limiting paths which are interconnected at their end points, in which grid array three main directions are defined by the three bundles of non-intersecting connecting lines between the end points of the limiting paths which lie opposite one another in the grid elements, **characterised in that** two of the three main directions (22, 24) intersect one another at an angle of between 70° and 110°, and in that the third main direction (26) intersects the first two main directions (22, 24) at an angle of between

5

30° to 60° in the first and third or second and fourth quadrant respectively of the coordinate system defined by them.

2. Indicator device according to claim 1, **characterised in that** the connecting lines pertaining to at least one of the main directions (22, 24, 26) is curved.

3. Indicator device according to claim 1 or 2 **characterised in that** the angle between two respective main directions (22, 24, 26) at different locdations of the grid attays differs.

4. Indicator device according to one of claims 1 to 3, **characterised in that** one of the main directions (22) is defined by a connecting-line bundle extending horizontally through the grid array, and in that the second main direction (24) intersects the first main direction at an angle of between 75° and 90°.

5. Indicator device according to one of claims 1 to 4, **characterised in that** at last one part of the grid elements (11, 33, 55) of the grid array is divided into two independently controlled grid-element halves by a diagonal limiting path (42).

6. Indicator device according to claim 5, **characterised in that** the connecting lines, which define the two first main directions (22, 24), intersect in pairs within each grid elements whilst forming an inner rectangle (30), in which respect two oppositely disposed intersecting points (32) of said element form diagonally arranged corner points of the grid element (10), and the two other intersecting points (34) are arranged within the grid element (10) forming a quadrant diagonal (36) which substantially coincides with the third main direction (26) or forms an acute angle of less than 20° therewithn and in that the diagonal limiting path (42) is formed by the diagonal of the inner quadrant (30), which diagonal extends through the corner points (32) of the grid element.

7. Indicator device according to one of claims 1 to 6, **characterised in that** the grid elements (10) or the grid-element halves (11, 33, 55) respectively, are composed of LED, LCD, glow or glow-emission areas which are separately controlled and edged by the limiting paths (12, 12', 14, 14', 16, 16', 42).

8. Indicator device according to one of claims 1 to 7, **characterised in that** the grid elements (10) are formed by illumination chambers which are singlesidedly open and separated from one another at intermediate walls which are vertical relative to the grid-array plane, the intermediate areas of the chambers forming the limiting paths (12, 12', 14, 14', 16, 16') at the outer edges at the side of the openings.

9. Indicator device according to one of claims 1 to 8, **characterised in that** the grid elements (10) or the grid-element halves (11, 33, 55) respectively, comprise bi-stably mounted bodies or plates, each comprising two optically contrasting viewing surfaces, which are selectively pivotable and displaceable into a viewing position.

10. Indicator device according to one of claims 1 to 9, **characterised in that** one of the main directions is defined by a connecting-line bundle which extends horizontally in the grid array, and in that the second and third main direction (24, 36) is defined by straight bundles, which together with the first main direction include equal angles of ±70° to ±75° of respective opposite orientation.

FIG. 1

FIG. 2

FIG. 3 a

FIG. 3 b

FIG. 4 a

FIG. 4 b